# EUROPÄISCHE PATENTSCHRIFT

(11) **EP 2 132 973 B1**
(45) Veröffentlichungstag und Bekanntmachung des Hinweises auf die Patenterteilung: **07.09.2011**
(21) Anmeldenummer: 09162413.0
(22) Anmeldetag: 10.06.2009
(51) Int. Cl.: A01D 41/127, F16H 61/40, A01F 29/16

(54) **Antriebssystem für eine Erntemaschine**
Drive system for an agricultural harvester
Système d'entraînement pour une machine de récolte

(30) Priorität: 13.06.2008 DE 102008002428
(43) Veröffentlichungstag der Anmeldung: 16.12.2009
(73) Patentinhaber: Deere & Company, Moline, IL 61265-8098 (US)
(72) Erfinder: Bohrer, Stefan, 66606 St. Wendel (DE); Weis, Helmut, 66506 Maßweiler (DE)
(74) Vertreter: Holst, Sönke

(56) Entgegenhaltungen:
- EP-A- 1 400 162
- EP-A- 1 554 920
- EP-A- 1 721 518
- WO-A-02/09498
- US-A- 3 736 753

## Beschreibung

Die Erfindung betrifft ein Antriebssystem für eine Erntemaschine, umfassend:
einen Verbrennungsmotor mit einer Ausgangswelle,
eine Erntegutbearbeitungseinrichtung, die durch einen eine Kupplung umfassenden Antriebsstrang mit der Ausgangswelle des Verbrennungsmotors verbindbar ist,
eine auf der Seite der Erntegutbearbeitungseinrichtung der Kupplung mit dem Antriebsstrang verbundene oder verbindbare Hydropumpe, die einen Druckanschluss aufweist, welcher mit einem Druckbegrenzungsventil verbunden ist, über das einen bestimmten Druck überschreitendes Hydraulikfluid abfließen kann,
einen Hydromotor, der mit einem Einzugsförderer in Antriebsverbindung steht und hydraulikfluidleitend mit der Hydropumpe verbunden ist, und
eine Steuerung, die mit einem Aktor zur Betätigung der Kupplung verbunden ist.

### Stand der Technik

Bei landwirtschaftlichen Erntemaschinen geht von rotierenden Elementen eine Gefahr für den Bediener aus, wenn er während der Erntearbeit zur Beseitigung eines Gutstaus oder nachgewiesenen, eingedrungenen Fremdkörpers von seinem Arbeitsplatz heruntersteigt, um die Störung zu beheben, während sich das Element noch dreht. Besonders gefahrenträchtig ist die Häckseltrommel eines Feldhäckslers.

In der EP 1 400 162 A1 wurde daher vorgeschlagen, die Häckseltrommel eines Feldhäckslers mittels einer separaten Reibungsbremse anzuhalten, sobald eine Bedienersicherheitsbedingung nicht erfüllt ist, z. B. wenn der Bediener die Kabine verlassen hat. Dabei sind der Aufwand für die Reibungsbremse und ihre Verschleißanfälligkeit als nachteilig anzusehen.

Weiterhin wurde in der EP 1 721 518 A1 vorgeschlagen, die Vorpresswalzen eines Feldhäckslers mittels eines Hydromotors mit festem Schluckvolumen anzutreiben, der über eine Schaltventilanordnung mit einer Hydropumpe verbunden ist, welche zwecks Verstellung der Schnittlänge mit einer verstellbaren Taumelscheibe ausgestattet ist. Die Schaltventilanordnung dient zum schnellen Anhalten des Hydromotors im Fall des Nachweises eines Fremdkörpers durch einen Metalldetektor. Ein in der von der Hydropumpe zum Hydromotor führenden Druckleitung angeordnetes Wegeventil sperrt nach einer Abschaltung des Antriebs der Häckseltrommel die Druckleitung ab, so dass dann in der Hydropumpe ein Druck aufgebaut wird, der die Häckseltrommel abbremst. Gemäß eines dieselbe Anordnung betreffenden, als gattungsbildend angesehenen Artikels von H. Schneider und T. Rhody mit dem Titel "Differenzflächenventile (Logikelemente) für Schnellstop und Messertrommel-Bremse an einem Feldhäcksler", erschienen in VDI-Berichte Nr. 1895 (2005), Seiten 237 bis 242, ist die Kolbengeometrie des Wegeventils so gestaltet, dass bei Erreichen des maximalen Bremsdrucks der Kolben wie bei einem Druckbegrenzungsventil wieder öffnet und die Hydropumpe und den Antrieb vor Überlastung schützt. Als nachteilig ist hier der Aufwand für das Wegeventil anzusehen. Außerdem ist der mit dem hydrostatischen Antrieb der Vorpresswalzen erzielbare Schnittlängenbereich nach unten begrenzt, da nur die Hydropumpe verstellbar ist.

### Aufgabe der Erfindung

Die der Erfindung zu Grunde liegende Aufgabe wird darin gesehen, ein Antriebssystem für eine Erntemaschine zu schaffen, das mit wenig Aufwand ein Anhalten einer Erntegutbearbeitungseinrichtung ermöglicht.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Antriebssystem einer Erntemaschine umfasst einen Verbrennungsmotor, dessen Ausgangswelle über einen eine Kupplung umfassenden Antriebsstrang mit einer Erntegutbearbeitungseinrichtung verbunden ist. Der Antriebsstrang ist auf der Seite der Kupplung, die mit der Erntegutbearbeitungseinrichtung verbunden ist, mit einer Hydropumpe antriebsverbunden oder antriebsverbindbar, die wiederum hydraulikfluidleitend mit einem Hydromotor mit verstellbarem Schluckvolumen in Verbindung steht. Der Hydromotor treibt einen Einzugsförderer der Erntemaschine an. Eine Steuerung ist mit einem Aktor zum Öffnen und Schließen der Kupplung und mit einem Aktor zur Verstellung des Schluckvolumens des Hydromotors verbunden.

Im normalen Erntebetrieb treibt der Verbrennungsmotor über die dann geschlossene Kupplung und den Antriebsstrang die Erntegutbearbeitungseinrichtung und die Hydropumpe an, welche ihrerseits wiederum hydraulisch den Hydromotor antreibt, welcher den Einzugsförderer in Bewegung versetzt.

Veranlasst der Bediener die Steuerung, beispielsweise durch Betätigung einer Eingabeeinrichtung oder indem er seinen Arbeitsplatz verlässt, was durch eine geeignete Überwachungseinrichtung (s. EP 1 400 162 A1) nachgewiesen wird, die Erntegutbearbeitungseinrichtung anzuhalten, instruiert die Steuerung den Aktor der Kupplung, letztere zu öffnen, so dass die Erntegutbearbeitungseinrichtung nicht mehr durch den Verbrennungsmotor angetrieben wird. Um nun zu verhindern, dass die Erntegutbearbeitungseinrichtung noch lange nachläuft und ein Sicherheitsrisiko für den Bediener darstellt, veranlasst die Steuerung den Aktor des Hydromotors, diesen auf ein minimales Schluckvolumen einzustellen, d. h. auf einen Wert von Null oder nahezu Null. Dadurch erreicht man, dass sich in der Hydropumpe, die über die Erntegutbearbeitungseinrichtung und den Antriebsstrang weiterhin angetrieben wird und deren Druckanschluss durch den Hydromotor abgesperrt wird, ein relativ hoher Druck aufbaut. Dieser Druck wird über ein am Druckanschluss der Hydropumpe angeschlossenes Druckbegrenzungsventil abgebaut, über das einen bestimmten Druck überschreitendes Hydraulikfluid abfließen kann. Dieser Druckabbau wandelt die kinetische Energie der Erntegutbearbeitungseinrichtung in Wärmeenergie um und führt zu einer verschleißfreien Abbremsung der Erntegutbearbeitungseinrichtung.

Auf diese Weise erreicht man mit wenig Aufwand - und insbesondere ohne zusätzliches Wegeventil - eine verschleißfreie Abbremsung der Erntegutbearbeitungseinrichtung.

Bei einer bevorzugten Ausführungsform der Erfindung ist auch die Hydropumpe mit einer verstellbaren Verdrängung ausgestattet. Die Steuerung ist mit einem Aktor zur Verstellung der Verdrängung der Hydropumpe verbunden. Dadurch erreicht man zum Einen einen hinreichenden Verstellbereich des hydraulischen Antriebs des Einzugsförderers, und zum Anderen kann die Steuerung bei Öffnung der Kupplung die Verdrängung der Hydropumpe auf einen maximalen Wert verstellen, was zu maximalem Ölfluss durch das Druckbegrenzungsventil und somit zu einer effektiven Abbremsung der Erntegutbearbeitungseinrichtung führt.

Das Druckbegrenzungsventil ist vorzugsweise in das Gehäuse der Hydropumpe integriert, d. h. es kann ein schon serienmäßig in Hydropumpen vorhandenes Druckbegrenzungsventil genutzt werden, obwohl auch ein externes Druckbegrenzungsventil Verwendung finden kann.

Die vorliegende Erfindung eignet sich insbesondere zur Abbremsung einer Häckseleinrichtung eines Feldhäckslers. Sie kann aber auch an einem Mähdrescher verwendet werden, um eine Dreschtrommel oder eine axiale Gutbearbeitungseinrichtung anzuhalten.

### Ausführungsbeispiel

Anhand der Abbildungen wird ein Ausführungsbeispiel der Erfindung erläutert. Es zeigen:
- Fig. 1: eine schematische seitliche Ansicht einer selbstfahrenden Erntemaschine in Form eines Feldhäckslers, und
- Fig. 2: eine schematische Draufsicht auf das Antriebssystem der Erntemaschine.

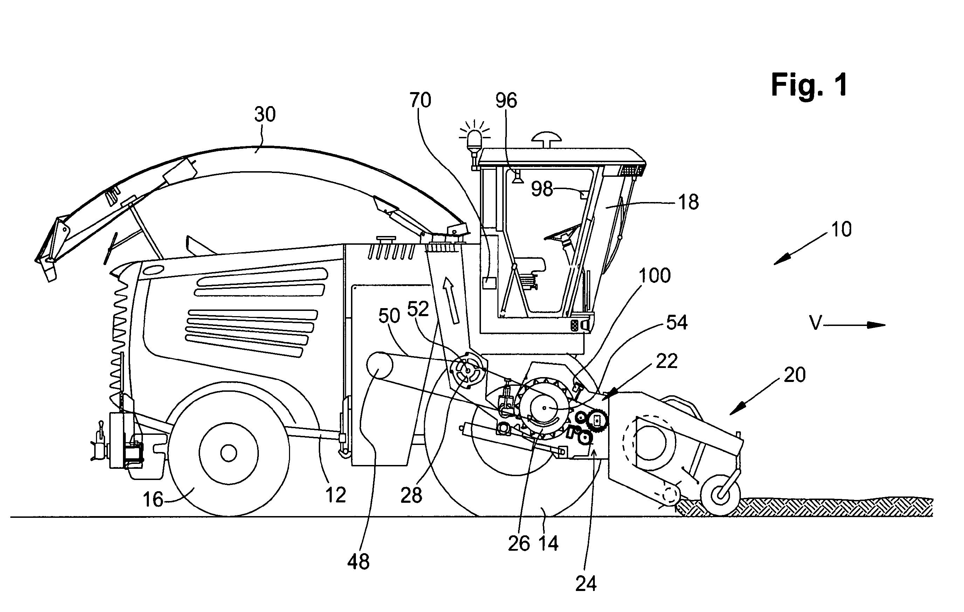

In der Figur 1 ist eine Erntemaschine 10 in der Art eines selbstfahrenden Feldhäckslers in schematischer Seitenansicht dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 in Form eines Aufnehmers einsehbar ist. Mittels des Erntevorsatzes 20 vom Boden aufgenommenes Erntegut, z. B. Gras oder dergleichen wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseleinrichtung 26 in Form einer Häckseltrommel zugeführt, die es in kleine Stücke häckselt und es einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Austragschacht 30. Im Folgenden beziehen sich Richtungsangaben, wie seitlich, unten und oben, auf die Vorwärtsrichtung V der Erntemaschine 10, die in der Figur 1 nach rechts verläuft.

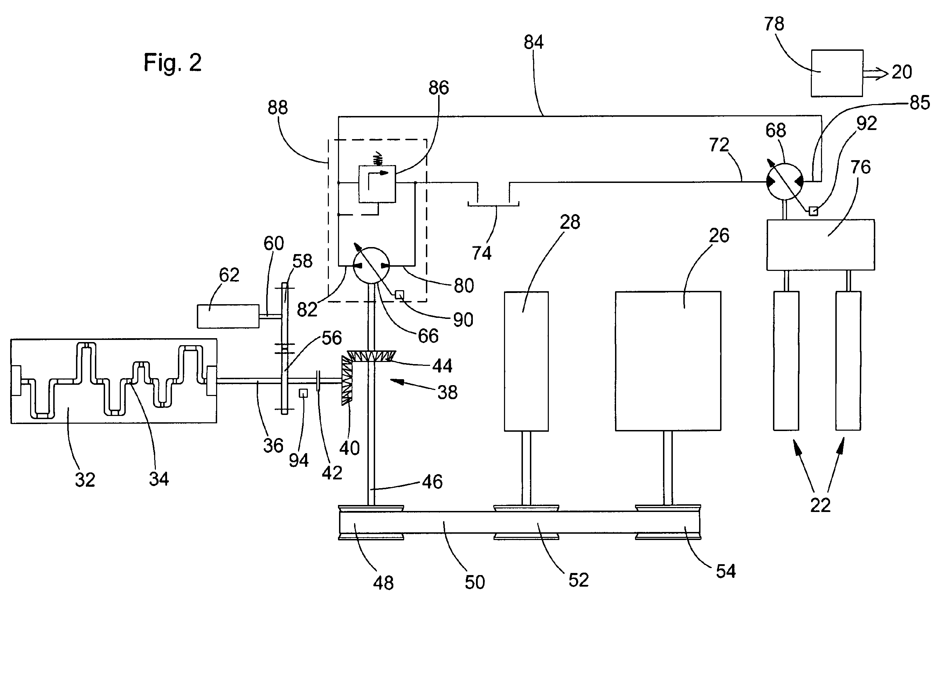

Die Figur 2 zeigt eine Draufsicht auf die Antriebsanordnung der Erntemaschine 10. Im rückwärtigen Bereich der Erntemaschine 10 befindet sich ein Verbrennungsmotor 32 insbesondere in Form eines Dieselmotors, der mit Längsträgern und/oder Querträgern des Rahmens 12 verbunden ist. Der Verbrennungsmotor 32 erstreckt sich in der Vorwärtsrichtung der Erntemaschine 10 bis etwa zum rückwärtigen Ende des Rahmens 12 und umfasst eine Kurbelwelle 34, die sich nach vorn aus dem Gehäuse des Verbrennungsmotors 32 heraus erstreckt. Die Kurbelwelle 34 treibt eine sich horizontal und nach vorn erstreckende Ausgangswelle 36 an. Anders als dargestellt, kann die Erntemaschine 10 auch mehr als einen Verbrennungsmotor 32 aufweisen, so dass die zur Verfügung stehende Antriebsleistung durch Zuschalten eines zweiten Verbrennungsmotors und/oder Umschalten auf einen zweiten, schwächeren oder gleichstarken oder stärkeren Verbrennungsmotor verändert werden kann.

Die Ausgangswelle 36 ist an ihrem vorderen Ende mit einem Winkelgetriebe 38 verbunden, das sich aus einem ersten Kegelzahnrad 40, welches über eine Kupplung 42 mit der Längswelle 36 verbunden ist, und aus einem zweiten Kegelzahnrad 44 zusammensetzt, das mit dem ersten Kegelzahnrad 40 kämmt. Die Drehachse des zweiten Kegelzahnrads 44 erstreckt sich horizontal und quer zur Vorwärtsrichtung. Das zweite Kegelzahnrad 44 ist mit einer Welle 46 verbunden, die eine Riemenscheibe 48 antreibt. Die Riemenscheibe 48 wird von einem Treibriemen 50 umschlungen, der auch eine Riemenscheibe 52 für den Antrieb der Fördereinrichtung 28 und eine Riemenscheibe 54 zum Antrieb der Häckseleinrichtung 26 umschlingt. Das Winkelgetriebe 38, die Welle 46, die Riemenscheiben 48 und 54 und der Triebriemen 50 bilden einen Antriebsstrang, der die Ausgangswelle 36 mit der Häckseleinrichtung 26 verbindet. Zwischen der Kupplung 42 und der Ausgangswelle 36 können selbstverständlich weitere Elemente des Antriebsstrangs angeordnet werden, wie Zahnradgetriebe, Riemen, und dergleichen. Außerdem könnte der Verbrennungsmotor 32 quer zur Fahrtrichtung angeordnet werden und das Winkelgetriebe 38 entfallen. Die Kupplung 42 muss nicht als Reibungskupplung mit Scheiben ausgebildet sein, wie dargestellt, sondern kann auch als lös- und spannbarer Riementrieb oder auf beliebige andere Weise ausgeführt werden.

Die Längswelle 36 trägt zwischen der Kupplung 42 und dem Gehäuse des Verbrennungsmotors 32 noch ein am Umfang verzahntes Zahnrad 56, das mit einem weiteren Zahnrad 58 kämmt, welches über eine Längswelle 60 ein Pumpenaggregat 62 antreibt, das zur Versorgung der Hydromotoren zum Antrieb der Räder 14, 16 und anderer hydraulisch angetriebener Komponenten der Erntemaschine 10 dient.

Die Welle 46 steht in der dargestellten Ausführungsform permanent mit einer Hydropumpe 66 mit verstellbarer Verdrängung in Antriebsverbindung. Bei einer anderen, nicht dargestellten Ausführungsform ist zwischen der Welle 46 und der Hydropumpe 66 noch ein Schaltgetriebe angeordnet, das es ermöglicht, anstelle der Hydropumpe 66 einen Reversiermotor an die Welle 46 anzukoppeln, um bei gelöster Kupplung 42 die Häckseleinrichtung 26 in gegenüber dem Erntebetrieb umgekehrter Richtung anzutreiben und ihre Messer mittels einer Schleifeinrichtung 100 zu schleifen. Hierzu sei auf die Offenbarung der DE 10 2008 002 344 A1 verwiesen, die durch Verweis mit in die vorliegenden Unterlagen aufgenommen wird.

Die Hydropumpe 66 ist hydraulikfluidleitend mit einem Hydromotor 68 verbunden, der ein verstellbares Schluckvolumen aufweist und über ein Getriebe 76 die Vorpresswalzen des Einzugsförderers 22 antreibt. Ein weiterer Hydromotor 78 dient zum Antrieb der angetriebenen Elemente des Erntevorsatzes 20, bei dem es sich auch um einen Mähvorsatz zur Maisernte oder Erzeugung von Ganzpflanzensilage handeln könnte. Der weitere Hydromotor 78 wird durch eine Pumpe des Pumpenaggregats 62 angetrieben.

Ein Einlass 80 der Hydropumpe 66 und ein Auslass 72 des Hydromotors 68 sind mit einem Behälter 74 für Hydraulikfluid verbunden. Ein Druckanschluss 82 der Hydropumpe 66 und ein Druckanschluss 85 des Hydromotors 68 sind durch eine Druckleitung 84 direkt, d. h. ohne Zwischenschaltung von weiteren Ventilen o. ä., untereinander verbunden. Zwischen den Druckanschluss 82 der Hydropumpe 66 und ihren Einlass 80 ist ein Druckbegrenzungsventil 86 geschaltet, das bei einem definierten Druck am Druckanschluss 82 öffnet und dann Hydraulikfluid auf die Niederdruckseite, d. h. in den Behälter 74 ablässt, bis der Druck abgebaut ist und das Druckbegrenzungsventil 86 wieder schließt. Das Druckbegrenzungsventil 86 ist mit in das Gehäuse 88 der Hydropumpe 66 integriert.

Eine Steuerung 70 (s. Figur 1) ist mit einem Aktor 90 verbunden, der elektromagnetisch oder elektrohydraulisch arbeitet und die Verdrängung der Hydropumpe 66 beeinflusst. Außerdem ist die Steuerung 70 mit einem Aktor 92 verbunden, der elektromagnetisch oder elektrohydraulisch arbeitet und das Schluckvolumen des Hydromotors 68 beeinflusst. Schließlich ist die Steuerung 70 mit einem Aktor 94 verbunden, der die Kupplung 42 öffnet und schließt, und mit einer in der Fahrerkabine 18 angeordneten Bedienereingabeeinrichtung 98 und einer ebenfalls dort positionierten Bedienererfassungseinrichtung 96 in Form einer Kamera mit einem Bildverarbeitungssystem, das anhand der Bilder der Kamera erkennen kann, ob sich ein Bediener am Arbeitsplatz in der Fahrerkabine 18 befindet oder nicht. Es können auch beliebige andere Bedienererfassungseinrichtungen verwendet werden, wie in der EP 1 400 162 A1 offenbart wird, deren Offenbarung durch Verweis mit in die vorliegenden Unterlagen aufgenommen wird.

Die Bedienereingabeeinrichtung 98 ermöglicht es dem Bediener, einen (Straßen-) Fahrbetrieb auszuwählen, in dem die Kupplung 42 geöffnet ist und weder die Häckseleinrichtung 26 noch der Einzugsförderer 22 angetrieben wird, da auch die Hydropumpe 66 stillsteht. Auch der Erntevorsatz 20 wird dann nicht angetrieben. Die Räder 14 und ggf. (bei Allradantrieb) auch 16 werden über ihre Hydromotore und das Pumpenaggregat 62 angetrieben.

Weiterhin ermöglicht die Bedienereinrichtung dem Bediener, einen Erntebetrieb auszuwählen, in dem die Kupplung 42 geschlossen ist und die Häckseleinrichtung 26 und die Fördervorrichtung 28 über den Triebriemen 50 angetrieben werden. Die Welle 46 treibt dann auch die Hydropumpe 66 an, welche über die Druckleitung 84 den Hydromotor 68 beaufschlagt, der wiederum den Einzugsförderer 22 antreibt. Der Erntevorsatz 20 wird dann vom Pumpenaggregat 62 über den weiteren Hydromotor 78 angetrieben. Die Aktoren 90, 92 werden durch die Steuerung 70 derart angesteuert, dass sich eine gewünschte Schnittlänge des Häckselgutes ergibt, die durch die Bedienereingabeeinrichtung 98 eingegeben werden kann oder selbsttätig durch die Steuerung anhand von Messwerten von Sensoren vorgegeben wird, die Eigenschaften des Häckselguts erfassen, wie Feuchtigkeit oder Verdichtbarkeit. Vorzugsweise wird das Schluckvolumen des Hydromotors 68 auf den jeweils zur Erzielung der gewünschten Schnittlänge größtmöglichen Wert gestellt und die Verdrängung der Hydropumpe 66 entsprechend angepasst, um ein möglichst hohes Drehmoment des Einzugsförderers 22 erzielen zu können. Die Verstellbarkeit des Hydromotors 68 ermöglicht gegenüber einem Hydromotor mit festem Schluckvolumen größere Fördergeschwindigkeiten des Einzugsförderers 22 und somit kleinere Schnittlängen zu erzielen, indem durch den Aktor 92 die Taumelscheibe des Hydromotors 68 auf eine Stellung unterhalb des Maximalwerts gebracht wird.

Falls der Bediener den Erntebetrieb beenden oder irgendwelche Arbeiten am Erntevorsatz oder Einzugskanal vornehmen will, kann er über eine entsprechende Eingabe in die Bedienereingabeeinrichtung 98 die Steuerung 70 veranlassen, den Erntebetrieb zu beenden. Der Erntebetrieb wird auch selbsttätig beendet, wenn die Bedienererfassungseinrichtung 96 der Steuerung 70 mitteilt, dass der Bediener sich nicht mehr an seinem Arbeitsplatz in der Fahrerkabine 18 befindet. Die Steuerung 70 veranlasst in diesen Fällen, dass der Aktor 94 die Kupplung 42 öffnet und dass das Pumpenaggregat 62 den Hydraulikfluidfluss zum weiteren Hydromotor 78 einstellt. Außerdem veranlasst die Steuerung 70 den Aktor 92, den Hydromotor 68 auf minimales Schluckvolumen zu verstellen und den Aktor 90, die Hydropumpe 66 auf maximale Verdrängung zu stellen. Die Hydropumpe 66 wird durch die aufgrund ihres Trägheitsmoments noch rotierende Häckseleinrichtung 26, den Treibriemen 50 und die Welle 46 weiterhin angetrieben und fördert gegen den stehenden Hydromotor 68. Es baut sich am Druckanschluss 82 der Hydropumpe 66 demnach ein relativ hoher Druck auf, der über das Druckbegrenzungsventil 86 abgeleitet wird. Dabei wird die Rotationsenergie der Häckseleinrichtung 26 und der anderen mit ihr rotierenden Elemente in Wärme umgewandelt und die Häckseleinrichtung 26 kommt in hinreichend kurzer Zeit zum Stehen, so dass sich der Bediener, sollte er beispielsweise einen Gutstau im Einzugsförderer 22 beseitigen wollen, sich nicht an ihr verletzen kann.

## Patentansprüche

1. Antriebssystem für eine Erntemaschine (10), umfassend:
einen Verbrennungsmotor (32) mit einer Ausgangswelle (36),
eine Erntegutbearbeitungseinrichtung, die durch einen eine Kupplung (42) umfassenden Antriebsstrang mit der Ausgangswelle (36) des Verbrennungsmotors (32) verbindbar ist,
eine auf der Seite der Erntegutbearbeitungseinrichtung der Kupplung (42) mit dem Antriebsstrang verbundene oder verbindbare Hydropumpe (66), die einen Druckanschluss (82) aufweist, welcher mit einem Druckbegrenzungsventil (86) verbunden ist, über das einen bestimmten Druck überschreitendes Hydraulikfluid abfließen kann,
einen Hydromotor (68), der mit einem Einzugsförderer (22) in Antriebsverbindung steht und hydraulikfluidleitend mit der Hydropumpe (66) verbunden ist, und
eine Steuerung (70), die mit einem Aktor (94) zur Betätigung der Kupplung (42) verbunden ist,
**dadurch gekennzeichnet, dass** der Hydromotor (68) ein durch einen mit der Steuerung (70) verbundenen Aktor (92) verstellbares Schluckvolumen aufweist,
und dass die Steuerung (70) betreibbar ist, bei einer Öffnung der Kupplung (42) das Schluckvolumen des Hydromotors (68) auf einen minimalen Wert zu verstellen, so dass sich dann in der Hydropumpe (66) ein Druck aufbaut, der durch das Druckbegrenzungsventil (86) abgebaut wird, was zur Abbremsung der Erntegutbearbeitungseinrichtung führt.

2. Antriebssystem nach Anspruch 1, **dadurch gekennzeichnet, dass** die Hydropumpe (66) mit einer verstellbaren Verdrängung ausgestattet ist und dass die Steuerung (70) mit einem Aktor (90) zur Verstellung der Verdrängung der Hydropumpe (66) verbunden und betreibbar ist, bei Öffnung der Kupplung (42) die Verdrängung der Hydropumpe (66) auf einen maximalen Wert zu verstellen.

3. Antriebssystem nach Anspruch 1 oder 2, **dadurch gekennzeichnet, dass** das Druckbegrenzungsventil (86) in das Gehäuse (88) der Hydropumpe (66) integriert ist.

4. Erntemaschine (10) mit einem Antriebssystem nach einem der vorhergehenden Ansprüche.

5. Erntemaschine (10) nach Anspruch 4, **dadurch gekennzeichnet, dass** sie ein Feldhäcksler ist und dass die Erntegutbearbeitungseinrichtung eine Häckseleinrichtung (26) ist.

## Claims

1. Drive system for an agricultural harvester (10), comprising:
an internal combustion engine (32) with an output shaft (36),
a crop-processing device which can be connected to the output shaft (36) of the internal combustion engine (32) by a drive train comprising a clutch (42),
a hydraulic pump (66) which is or can be connected to the drive train on the crop-processing device side of the clutch (42) and has a delivery connection (82) which is connected to a pressure-limiting valve (86) via which hydraulic fluid exceeding a certain pressure can flow off,
a hydraulic motor (68) which is drive-connected to an intake conveyor (22) and is connected to the hydraulic pump (66) in a manner conducting hydraulic fluid, and
a controller (70) which is connected to an actuator (94) for actuating the clutch (42),
**characterized in that** the hydraulic motor (68) has an absorption volume which can be adjusted by an actuator (92) connected to the controller (70),
and **in that** the controller (70) can be operated to adjust the absorption volume of the hydraulic motor (68) to a minimum value, when the clutch (42) is opened, such that a pressure then builds up in the hydraulic pump (66), said pressure being dissipated by the pressure-limiting valve (86), this resulting in braking of the crop-processing device.

2. Drive system according to Claim 1, **characterized in that** the hydraulic pump (66) is provided with an adjustable volume of displacement, and **in that** the controller (70) is connected to an actuator (90) for adjusting the volume of displacement of the hydraulic pump (66) and can be operated to adjust the volume of displacement of the hydraulic pump (66) to a maximum value when the clutch (42) is opened.

3. Drive system according to Claim 1 or 2, **characterized in that** the pressure-limiting valve (86) is integrated in the housing (88) of the hydraulic pump (66).

4. Agricultural harvester (10) with a drive system according to one of the preceding claims.

5. Agricultural harvester (10) according to Claim 4, **characterized in that** said agricultural harvester is a field chopper, and **in that** the crop-processing device is a chaff-cutting device (26).

## Revendications

1. Système d'entraînement pour une machine de récolte (10), comprenant :
un moteur à combustion interne (32) avec un arbre de sortie (36),
un dispositif de traitement des récoltes, qui peut être connecté par une chaîne cinématique comprenant un embrayage (42) à l'arbre de sortie (36) du moteur à combustion interne (32),
une pompe hydraulique (66) connectée ou pouvant être connectée sur le côté du dispositif de traitement des récoltes de l'embrayage (42) à la chaîne cinématique, laquelle pompe hydraulique comprend un raccord de pression (82), qui est connecté à une soupape de limitation de la pression (86), par le biais de laquelle du fluide hydraulique dépassant une pression déterminée peut s'écouler,
un moteur hydraulique (68), qui est en liaison d'entraînement avec un transporteur d'amenée (22) et qui est connecté à la pompe hydraulique (66) en conduisant le fluide hydraulique, et
une commande (70), qui est connectée à un actionneur (94) pour actionner l'embrayage (42),
**caractérisé en ce que** le moteur hydraulique (68) présente une cylindrée réglable par un actionneur (92) connecté à la commande (70),
et **en ce que** la commande (70) peut être actionnée pour régler à une valeur minimale la cylindrée du moteur hydraulique (68) dans le cas d'une ouverture de l'embrayage (42), de sorte qu'une pression s'établisse alors dans la pompe hydraulique (66), laquelle est diminuée par la soupape de limitation de la pression (86), ce qui entraîne le freinage du dispositif de traitement des récoltes.

2. Système d'entraînement selon la revendication 1, **caractérisé en ce que** la pompe hydraulique (66) est équipée d'un refoulement réglable et **en ce que** la commande (70) est connectée à un actionneur (90) pour le réglage du refoulement de la pompe hydraulique (66) et peut être actionnée pour régler le refoulement de la pompe hydraulique (66) à une valeur maximale lorsque l'embrayage (42) est ouvert.

3. Système d'entraînement selon la revendication 1 ou 2, **caractérisé en ce que** la soupape de limitation de la pression (86) est intégrée dans le boîtier (88) de la pompe hydraulique (66).

4. Machine de récolte (10) comprenant un système d'entraînement selon l'une quelconque des revendications précédentes.

5. Machine de récolte (10) selon la revendication 4, **caractérisée en ce qu'**il s'agit d'une faucheuse-hacheuse et **en ce que** le dispositif de traitement des récoltes est un dispositif hacheur (26).
